# EUROPEAN PATENT APPLICATION

(11) **EP 1 802 085 A1**
(43) Date of publication of application: **27.06.2007**
(21) Application number: 06026690.5
(22) Date of filing: 22.12.2006
(51) Int. Cl.: H04M 1/247, H04M 1/725, G06F 3/048

(54) **Method of displaying at least one function command and mobile terminal implementing the same**

(30) Priority: 23.12.2005 KR 20050128528
(71) Applicant: LG Electronics Inc., Yongdungpo-Gu Seoul 150-010 (KR)
(72) Inventor: Hong, Sang Hyuk, Mapo-gu Seoul (KR); Kim, Hyun Ho, Sadang4(sa)-dong Dongjak-du Seoul (KR)
(74) Representative: von Hellfeld, Axel

(57) **Abstract**

A method of displaying at least one function command and mobile terminal implementing the same are disclosed, by which a user is facilitated to select and execute a function command by excluding a tree-structured function command configuration from the mobile terminal. The present invention includes displaying an object list, which comprises at least one object, in a first fixed region of a display unit, and displaying a menu list, which comprises at least one function command executable for the selected object, in a second fixed region of the display unit if one of the at least one object is selected from the object list.

## Description

This application claims the benefit of the Korean Patent Application No. 10-2005-0128528, filed on December 23, 2005, which is hereby incorporated by reference as if fully set forth herein.

### BACKGROUND OF THE INVENTION

### Field of the Invention

The present invention relates to at least one function command display, and more particularly, to a method of displaying at least one function command and mobile terminal implementing the same. Although the present invention is suitable for a wide scope of applications, it is particularly suitable for facilitating a user to select and execute a function command in the mobile terminal.

### Discussion of the Related Art

With remarkable developments in the field of information communication technology, the areas of the information and communication technology expects great changes. Admist rapidly changing information/communication technology, a mobile communication terminal is being widely used and can be regarded as a necessity in today's society.

In order to meet a user's demand according to the base expansion of the mobile communication terminals, various functions including a short message service, a multimedia messaging system (MMS), an Internet access and a general voice calling are provided to the mobile communication terminal.

In addtion, as the tendency for convergence to provide various functions to one device expands, various additional functions including a multimedia play, a photographing, a game, and a basic communication are provided to a mobile communication terminal (e.g., a mobile phone).

Furthermore, a size of a screen of a display unit of a mobile terminal tends to decrease to reduce an exterior size of the mobile terminal for the portability of the mobile terminal. Due to these reasons, more menus or icons for the function commads tend to be displayed on the screen of the display unit in a complicated tree structure to perform the aforesaid various functions.

However, in order to select a specific function command from the menu tree structure, a user has to pass at least two function command selecting procedures. As such, a process for selecting the specific function command can be considered very complicated.

Further, unless the user has the menu tree structure memorized, the user has to guess the position of the specific function command in the menu tree structure to find a final function command (lowest function command in the tree structure) specified by the user. Consequently, a very troublesome work of finding the final or lowest function command again after an upper function command has been retrieved in case that the specific function command fails to be selected correctly from the menu tree structure.

### SUMMARY OF THE INVENTION

Accordingly, the present invention is directed to a method of displaying at least one function command and mobile terminal implementing the same that substantially obviate one or more problems due to limitations and disadvantages of the related art.

An object of the present invention is to provide a method of displaying at least one function command and mobile terminal implementing the same, by which a user is facilitated to select and execute at least one function command by excluding a tree-structured menu configuration from the mobile terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of displaying at least one function command in a mobile terminal according to the present invention includes displaying an object list, which comprises at least one object, in a first fixed region of a display unit, and displaying a menu list, which comprises the at least one function command executable for the selected object, in a second fixed region of the display unit if one of the at least one object is selected from the object list.

In another aspect of the present invention, a method of displaying at least one function command in a mobile terminal includes displaying an object list, which comprises at least one object, in a first display unit, displaying a menu list, which comprises at least one function command executable for the selected object, in a second display unit if one of the at least one object is selected from the object list, and executing the selected function command corresponding to the selected object if one of the at least one function command is selected from the menu list.

In another aspect of the present invention, a mobile terminal includes a display unit, an input unit, and a control unit displaying an object list, which comprises at least one object, in a first fixed region of a display unit, if one of the one or more objects is selected from the object list, wherein if one of the one or more objects is selected from the object list, the control unit displays the menu list of one or more function commands corresponding to the selected object in a second fixed region of the display unit and if one of the one or more function commands is selected from the menu list, the control unit allows the selected function command to be executed for the selected object.

In another aspect of the present invention, a mobile terminal includes a first display unit, a second display unit, an input unit, and a control unit displaying an object list of at least one or more objects in the first display unit, wherein if one of the at least one object is selected from the object list, the control unit displays a menu list of at least one function command corresponding to the selected object in the second display unit, and if one of the at least one function command is selected from the menu list, the control unit allows the selected function command to be executed for the selected object.
In another aspect of the present invention, a method of displaying at least one function command in a mobile terminal includes displaying a menu list, which comprises at least one function command, in a first fixed region of a display unit, displaying an object list, which comprises at least one object, enabling the selected function command to be executed if one of the at least one function command is selected from the menu list, and executing the selected function command corresponding to the selected object if one of the at least one object is selected from the object list.
In another aspect of the present invention, a mobile terminal includes a display unit, an input unit, and a control unit displaying a menu list, which comprises at least one function command, in a first fixed region of a display unit, wherein if one of the at least one function command is selected from the menu list, the control unit displays an object list of at least one or more objects enabling the selected function command to be executed, and if one of the at least one object is selected from the object list, the control unit allows the selected function command to be executed for the selected object.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a schematic block diagram of a mobile terminal according to the present invention;

FIG. 2 is a schematic flowchart of a method of displaying at least one function command according to a first embodiment of the present invention;

FIGs. 3A to 3D are diagrams of pictures displayed on a display unit screen of a mobile terminal implementing at least one function command displaying method according to a first embodiment of the present invention;

FIG. 4A and FIG. 4B are diagrams of another pictures displayed on a display unit screen of a mobile terminal implementing at least one function command displaying method according to a first embodiment of the present invention;

FIG. 5A and FIG. 5B are transitional diagrams of pictures displayed on a touchscreen of a mobile terminal implementing at least one function command displaying method according to a first embodiment of the present invention;

FIG. 6 is a schematic flowchart of a method of displaying at least one function command according to a second embodiment of the present invention; and

FIGs. 7A to 7D are diagrams of pictures displayed on a display unit screen of a mobile terminal implementing at least one function command displaying method according to a second embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The present invention is applicable to a mobile terminal such as a mobile phone, a personal digital assistant (PDA), a portable multimedia player (PMP) and the like. Yet, for convenience and simplicity of explanation in the following description, it is assumed that the present invention is applied to a mobile communication terminal such as a mobile phone. As such, it should be understood that the present invention is not limited to the following explanation and embodiments.

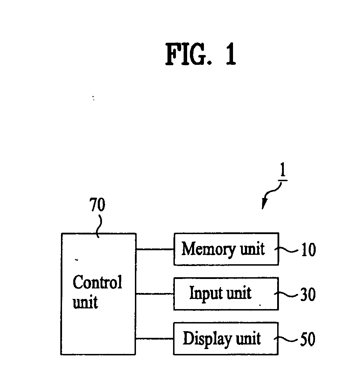

A configuration of a mobile terminal according to the present invention is explained with reference to FIG. 1. FIG. 1 is a schematic block diagram of a mobile terminal according to the present invention.

Referring to FIG. 1, a mobile terminal 1 includes a memory unit 10, an input unit 30, a display unit 50, and a control unit 70. Here, the mobile terminal 1 can be provided with other various additional elements (e.g., an Radio Frequency (RF) processing unit, a multimedia content play unit, a camera unit) in addition to the aforesaid elements. Since the additional elements are not directly associated with the present invention, explanations for the additional elements will be omitted in the following description for brief explanation of the present invention.

The memory unit 10 stores various types of software to implement various function commands provided by the mobile terminal 1 and various types of data associated with the software. Moreover, the memory unit 10 stores phone numbers, call records, video files, audio files, text, or voice messages, moving picture files and the like as targets of the function command in case that a specific function command is executed in the mobile terminal 1. Hereinafter, the above execution targets are called 'objects'.

Preferably, the memory unit 10 can store an accumulated selection count of each of the function commands, and/or an accumulated selection count of each of the objects. Moreover, the memory unit 10 can store information for a recently or last selected function command, and/or information for a recently or last selected object. The accumulated selection count and the information can be used for a function command displaying method according to the present invention, which will be explained later.

The input unit 30 enables a terminal user to input various commands or information. The input unit 30 may include a keypad type input device, a navigation key type input device, a touch pad type input device, a jog-dial type input device and/or the like, which does not put limitation on the input unit of the present invention.

The display unit 50 displays various kinds of visual information provided by the mobile terminal 1. Moreover, the mobile terminal 1 may include at least two display units, if necessary. The function command and the objects are displayed on the display unit 50 which will be explained later.

A touchscreen is provided to the mobile terminal 1. Here, the touch screen can be configured perform the functions of the input unit 30 and the display unit 50 simultaneously.

Further, the control unit 70 controls the memory unit 10, the input unit 30 and the display unit 50 to enable a function command displaying method which can be implemented in the mobile terminal 1.

A function command displaying method to be implemented in the above-configured mobile terminal 1 is explained as follows.

### First Embodiment

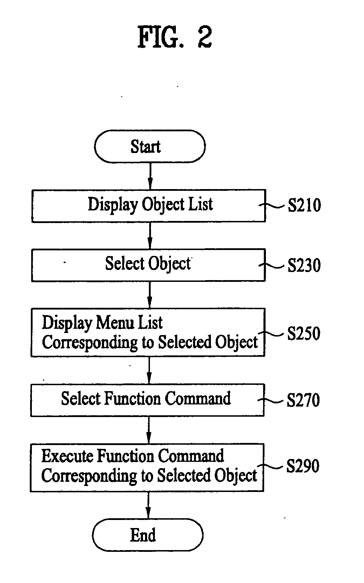

A method of displaying at least one function command according to a first embodiment of the present invention is explained with reference to FIGs. 2 to 4B as follows.

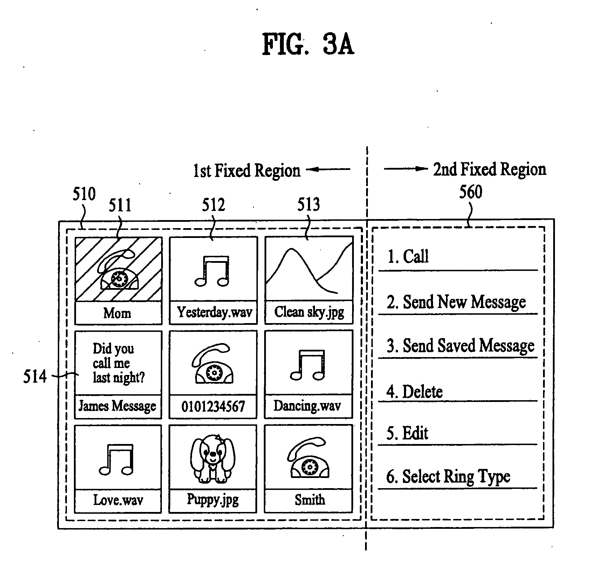

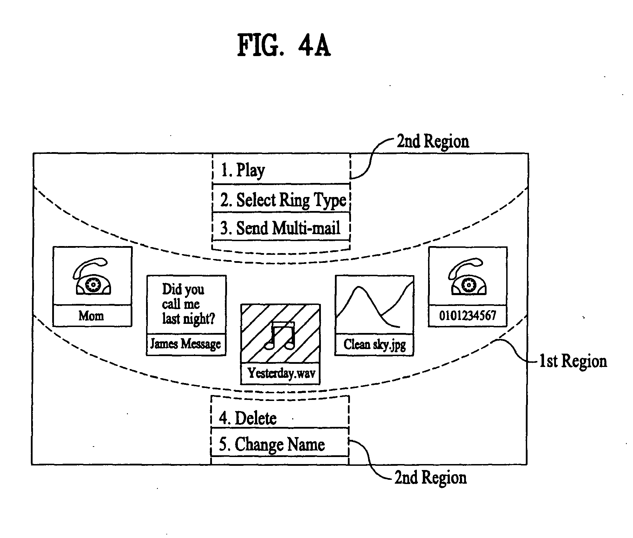

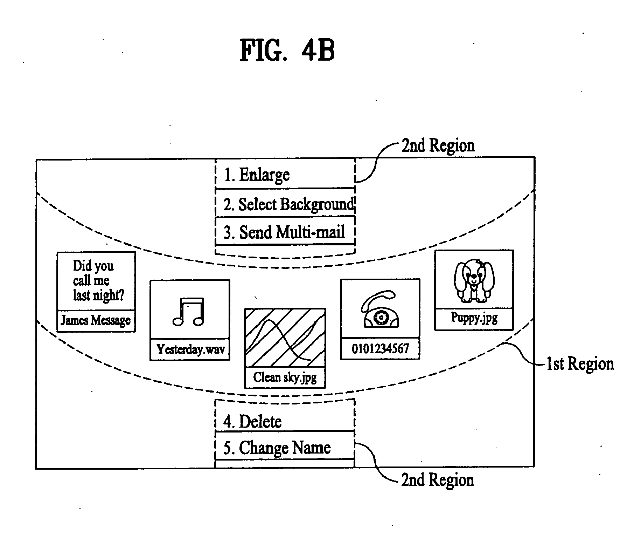

FIG. 2 is a schematic flowchart of a method of displaying at least one function command according to a first embodiment of the present invention, FIGs. 3A to 3D are diagrams of pictures displayed on a display unit screen of a mobile terminal implementing at least one function command displaying method according to the first embodiment of the present invention, and FIG. 4A and FIG. 4B are diagrams of another pictures displayed on a display unit screen of a mobile terminal implementing at least one function command displaying method according to the first embodiment of the present invention.

An object list 510 of at least one or more objects is displayed on the display unit 50 of the mobile terminal [S210]. The object list 510 can be configured to be displayed as a default if the mobile terminal is in a standby mode. The object list 510 can be configured to be displayed if a user inputs a command for a display of the object list to the mobile terminal 1. As mentioned above, the objects of various types, such as phone numbers, call records, video files, audio files, text or voice messages, moving picture files, can be listed on the object list 510. Yet, for convenience of conciseness, assuming that the phone number, video file, audio file and text message type objects among those objects are listed on the object list 510 in FIGs. 3A to 3D, the explanation continues as follows.

Preferably, the object list 510 is configured to be displayed in a specific style in a predetermined region of the display unit (hereinafter called 'first fixed region'). FIGs. 3A to 3D exemplarily show that the object list 510 is uniformly displayed in a matrix style on a left region of the display unit. Namely, the left region of the display unit corresponds to the first fixed region in FIGs. 3A to 3D.

The objects of the object list can be displayed in various ways. That is, the objects can be displayed in a descending order based on a selection count of each of the objects. Alternatively, the objects can be displayed in an order starting from most recently selected object to first selected object by the user. Alternatively, the objects can be displayed in an order preconfigured by the user. If there are too many objects, making it difficult to display the all of the objects simultaneously on a screen, the object list can be configured so that a specified number of objects are displayed.

Preferably, each of the objects on the object list can be configured to be displayed as a combination of a text indicating a name of the corresponding object and an image indicating a type of the corresponding object. In particular, with respect to objects such as a video file or a moving picture file, an image of the file itself can be displayed instead of an image indicating a type of the object.

Subsequently, one of the objects can be selected from the object list 510 [S230]. If one object is selected from the object list, the selected object is preferably displayed to be visually distinct from rest of the unselected objects of the object list by using a color change, a size variation, a flickering effect or the like.

After one of the objects is selected, a list of function commands (hereinafter called 'menu list) 560, which can be executed for the selected object, is displayed [S250].

FIG. 3A is an exemplary diagram showing an automatically selected object on a mobile terminal. More specifically, FIG 3A illustrates an object 511 of a most upper end on a most left side being automatically selected, as a default, if the object list 510 is initially displayed on the display unit.

In FIG. 3A, the menu list 560 including function commands applicable to the object 511 at the most upper end on the most left side is displayed. In addition, since the object 511 at the most upper end on the most left side is a phone number type object, function commands applicable to the phone number type object, i.e., 'page', 'send new message', 'send stored message', 'delete', 'edit' and 'set bell sound' are listed on the menu list 560.

Preferably, the menu list 560, as shown in FIG. 3A, is configured to be displayed in a specific style in another predetermined region (hereinafter called 'second fixed region) different from the first fixed region together with the object list 510. FIGs. 3A to 3D exemplarily show that the menu list 560 is fixedly displayed in a matrix style in a right region of the display unit together with the object list 510. Namely, in FIGs. 3A to 3D, the right region of the display unit corresponds to the second fixed region.

According to the present invention, the menu list is not limited to being displayed concurrently with the object list in the specific region. Instead, the menu list can be displayed independently. For instance, if one object is selected from the object list, the menu list corresponding to the selected object can be displayed as soon as the object list disappears. If two display units are provided to the mobile terminal 1, the object list can be displayed in one of the two while the menu list can be displayed in the other of the two.

If the object list 510 and the menu list 560, as shown in FIG. 3A, are displayed on the display unit, a case where an audio file type object is selected from the object list by a user is explained as follows.

First, a user selects an audio file type object (e.g., 'yesterday.wav' object 512) from the object list 510. The selection of the audio file type object from the object list can be carried out by a manipulation of the navigation key or the jog-dial as well as the keypad of the input unit 30 of mobile terminal 1. In case that the input unit 30 includes the touchscreen, the audio file type object can be selected by the user directly touching the audio file type object on the touchscreen.

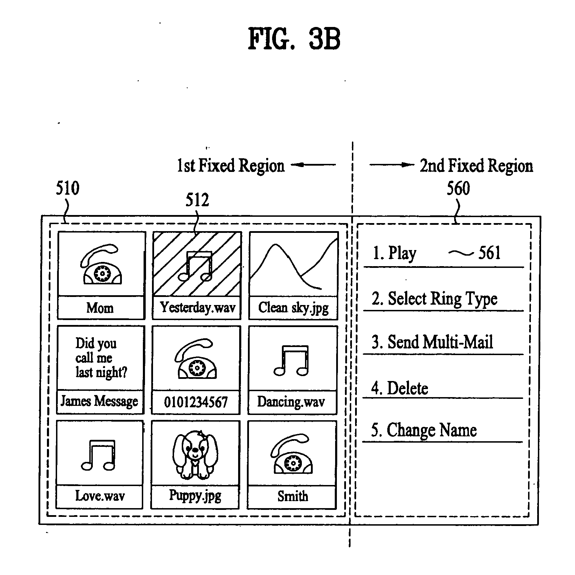

If so, a menu list, as shown in FIG. 3B, including function commands applicable to the audio file type object is displayed in the second fixed region. The function commands shown in FIG. 3B include 'play', 'set bell sound', 'transmit multi-mail', 'delete' and 'change name', which are applicable to the audio file type object.

If the user selects a specific function command from the menu list [S270], a function corresponding to the selected function command for the selected object is executed in the mobile terminal [S280]. In particular, if the user selects the 'play' function command 561, the selected audio file type object is played back in the mobile terminal.

With respect to the object selection, the selection of the specific function command on the menu list can be carried out by a manipulation of the navigation key or the jog-dial as well as the keypad of the input unit 30 of mobile terminal 1. If the input unit 30 includes the touchscreen, the specific function command can be selected by the user directly touching the specific function command on the touchscreen.

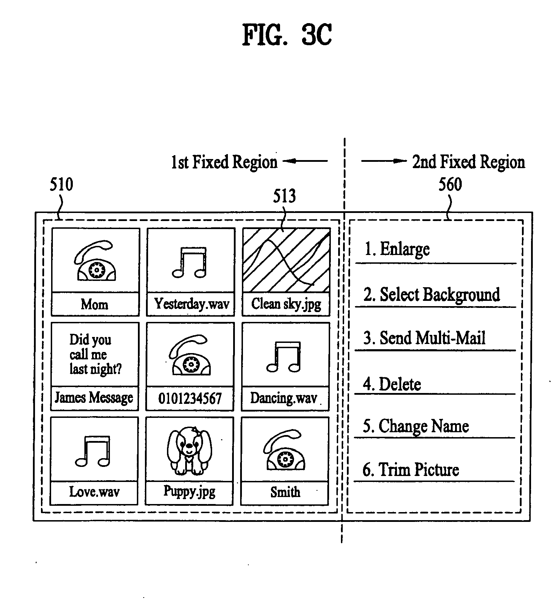

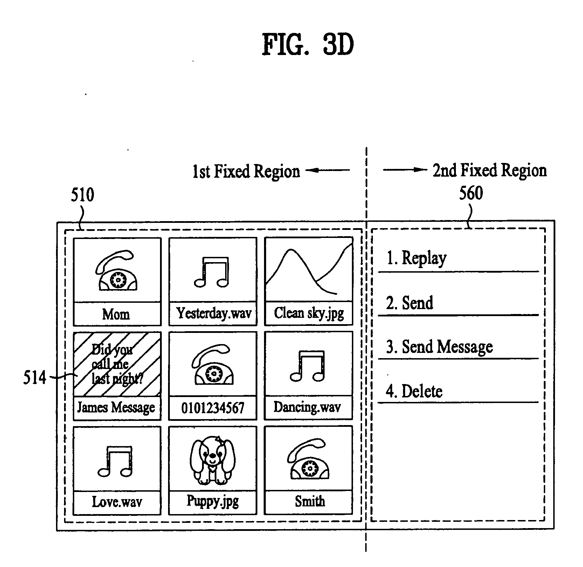

As discussed above, the menu list can be configured different at least in part according to a type of the selected object. A more detailed discussion will be made with respect to the menu lists shown in FIG. 3C and FIG. 3D.

Referring to FIG. 3C, a video file type object (e.g., 'clean sky.jpg' 513) is selected from the object list. Here, the function commands corresponding to the video file type object, e.g., 'enlarge', 'background picture set', 'multi-mail transmit', 'delete', 'change name' and 'picture decorate', are displayed on the menu list 560.

Referring to FIG. 3D, a text message type object (e.g., James Message 514) is selected from the object list. Here, the function commands corresponding to the text message type object, such as 'reply', 'deliver', 'store in text storage box' and 'delete', are displayed on the menu list.

As mentioned in the foregoing description, it is not mandatory for the object list or the menu list to be displayed in the matrix style only. For instance, as shown in FIG. 4A or FIG. 4B, the object list is displayed in an arc style in the first fixed region while the menu list is displayed in a strap style crossing the selected object of the object list in the second fixed region. Since those skilled in the art are able to fully understand FIG. 4A and FIG. 4B, the detailed explanation will be omitted for conciseness of the specification of the present invention.

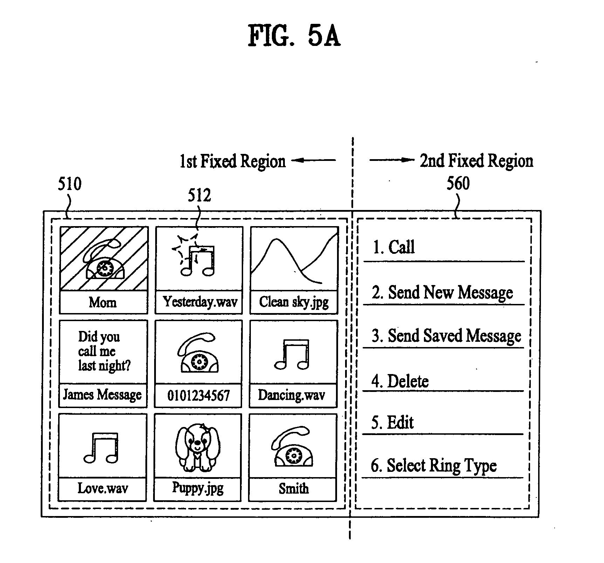

Meanwhile, if a touch screen is provided to the mobile terminal, an object selection from the object list and a function command selection from the menu list can be further facilitated. This will be explained with reference to FIGs. 5A to 5C.

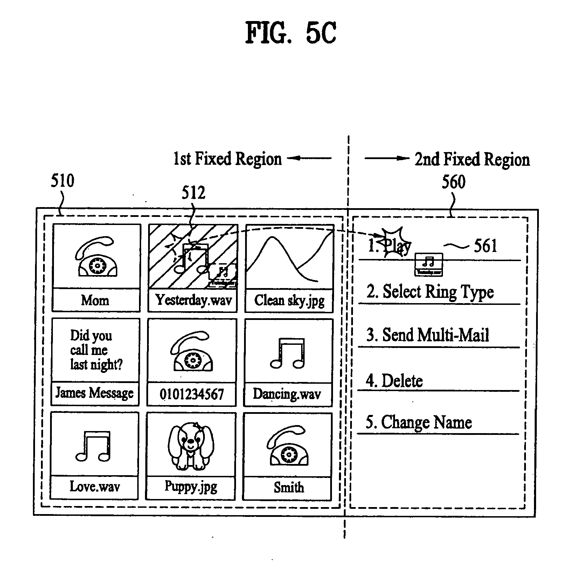

FIG. 5A and FIG. 5C are transitional diagrams of pictures displayed on a touchscreen of a mobile terminal implementing at least one function command displaying method according to a first embodiment of the present invention.

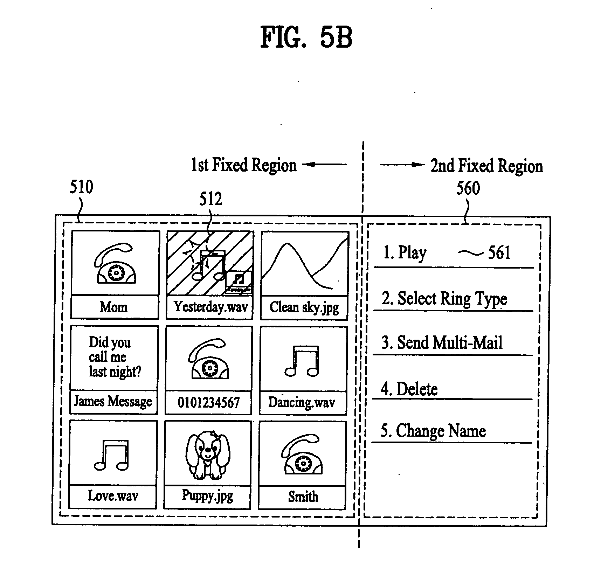

Referring to FIG. 5A, a terminal user touches an audio file type object 512 on a touchscreen. Referring to FIG. 5B, a menu list 560 corresponding to the audio file type object is displayed.

Referring to FIG. 5C, the terminal user can drag and drop the audio file type object 512 in a specific function command (e.g., 'play' function command 561) from the menu list. With this, the function command for the dragged & dropped object is executed in the mobile terminal.

### Second Embodiment

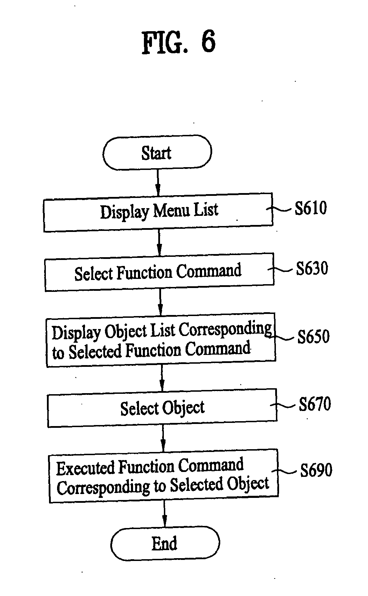

A method of displaying at least one function command according to a second embodiment of the present invention is explained with reference to FIGs. 6 to 7D as follows.

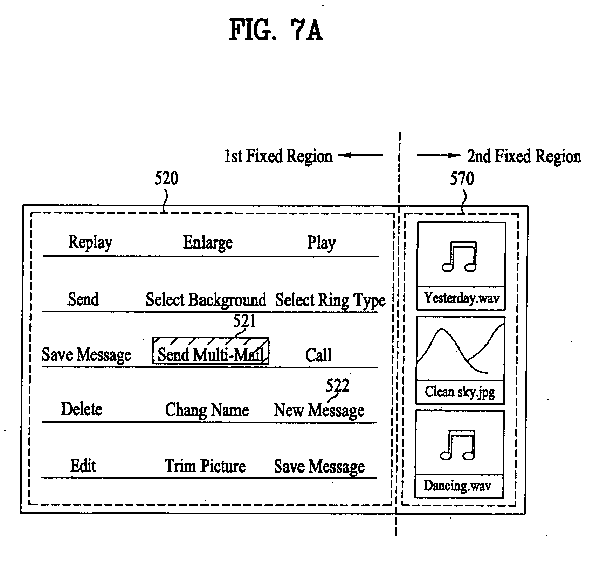

FIG. 6 is a schematic flowchart of a method of displaying at least one function command according to a second embodiment of the present invention and FIGs. 7A to 7D are diagrams of pictures displayed on a display unit screen of a mobile terminal implementing at least one function command displaying method according to a second embodiment of the present invention.

Referring to FIG. 7A, a menu list 520, on which at least one or more function commands are listed, is displayed on the display unit 50 of the mobile terminal 1 [S610]. The menu list 520 can be configured to be displayed as a default if the mobile terminal is in a standby mode. The menu list 520 can be configured to be displayed if a user inputs a command for a display of the menu list to the mobile terminal 1. Preferably, all function commands that can be provided by the mobile terminal are listed on the menu list.

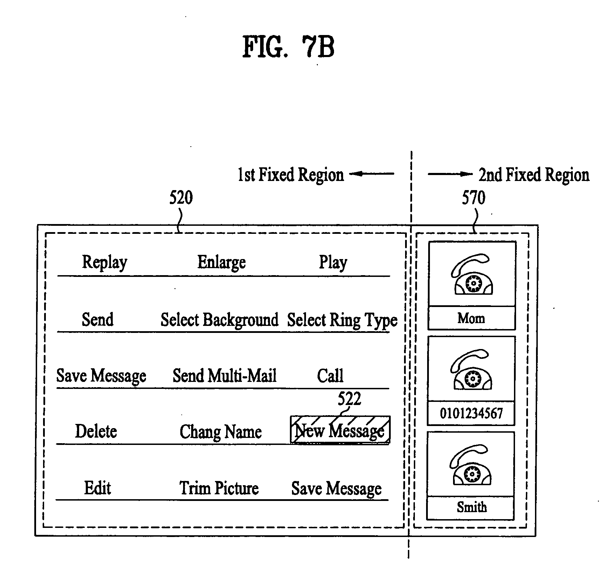

Preferably, the menu list 520 is configured to be displayed in a specific style in a predetermined region of the display unit (hereinafter called 'first fixed region'). FIGs. 7A and FIG. 7b exemplarily show that the menu list 520 is fixedly displayed in a matrix style on a left region of the display unit. Here, the left region of the display unit corresponds to the first fixed region in FIG. 7A and FIG. 7B.

The function commands of the menu list can be displayed in an descending order based on a selection count of each of the function commands. Alternatively, the function commands in the menu list can be displayed in an order starting from most recently selected function command to first selected function command by the user. Alternatively, the function commands of the menu list can be displayed in an order preconfigured by the user. If there are too many function commands, making it difficult to display all of the function commands simultaneously on a screen, the menu list can be configured so that a specified number of function commands are displayed.

Subsequently, one of the function commands can be selected from the menu list [S630]. If one function command is selected from the menu list, the selected function command is preferably displayed to be visually distinct from rest of the unselected function commands of the menu list using a color change, a size variation, a flickering effect or the like.

After one of the function command is selected, a list of objects (hereinafter called 'object list) 570, which is executable for the selected function command, is displayed. Preferably, each of the objects of the object list 570 is configured to be displayed as a combination of a text indicating a name of the object and an image indicating a type of the object. In particular, with respect to objects such as a video file and a moving picture file, an image of a file itself can be displayed instead of an image indicating a type of the object.

FIG. 7A exemplarily shows a mobile terminal configured in a manner that a function command 521 at the center of the menu list 520 is automatically selected as a default if the menu list 520 is initially displayed on the display unit 50. In FIG. 7A, the object list 570 including objects applicable to the function command 521 at the center is displayed. In addition, since the function command 521 at the center is a 'multi-mail transmit' function command, objects executable for the 'multi-mail transmit' function command are exemplarily listed on the object list 570.

Preferably, the object list 570, as shown in FIG. 7A, is configured to be displayed in a specific style in another predetermined region (hereinafter called 'second fixed area') which is different from the first fixed region together with the menu list 520. FIG. 7A and FIG. 7B exemplarily show that the menu list 520 is fixedly displayed in a matrix style in a right region of the display unit together with the object list 570. Namely, in FIG. 7A and Fig. 7B, the region on the right side of the display unit corresponds to the second fixed region.

According to the present invention, the object list is not limited to being displayed concurrently with the menu list in a specific region. For instance, if one function command is selected from the menu list, the object list corresponding to the selected function command is displayed as soon as the menu list disappears. If two display units are provided to the mobile terminal 1, the menu list can be displayed in one of the two while the object list can be displayed in the other of the two.

If the menu list 520 and the object list 570, as shown in FIG. 7A, are displayed in the first and second fixed regions, respectively, a case where a 'send new message' function command 522 is selected from the menu list by a user is explained as follows.

First of all, a user selects a 'send new message' function command 522 from the menu list 520. The selection of the 'send new message' function command on the menu list 520 can be carried out by a manipulation of the navigation key or the jog-dial as well as the keypad of the input unit 30 of mobile terminal 1. In case that the input unit 30 includes the touchscreen, the 'send new message' function command can be selected by the user directly touching the 'send new message' function command on the touchscreen.

If so, an object list 570, as shown in FIG. 7B, including objects executable for the 'send new message' function command 522 is displayed in the second fixed region.

If the user selects a specific object from the object list, a function corresponding to the selected object corresponding to the selected function command is executed in the mobile terminal.

With respect to the function command selection, the selection of the specific object from the object list can be carried out by a manipulation of the navigation key or the jog-dial as well as the keypad of the input unit 30 of mobile terminal 1. In case that the input unit 30 includes the touchscreen, the specific object can be selected by the user directly touching the specific object on the touchscreen.

As discussed above, it is not mandatory for the menu list or the object list to be displayed in the matrix style only. This is previously explained in the description of the first embodiment of the present invention and will be omitted in the following description for conciseness of the specification of the present invention.

Further, if a touch screen is provided to the mobile terminal, an object selection from the object list and a function command selection from the menu list can be further facilitated. This is previously explained in the description of the first embodiment of the present invention and will be omitted in the following description for conciseness of the specification of the present invention.

Accordingly, the present invention provides the following effects or advantages.

First of all, the present invention is able to execute all functions of a mobile terminal by one object selection and one function command selection made by a user without employing the conventional tree-structured function command configuration, thereby facilitating a procedure for using the mobile terminal considerably.

Secondly, the present invention enables a most recent or last selected object or a most frequently selected object to be displayed on a screen with priority, thereby facilitating a user to recognize a current use status of each function of a mobile terminal.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of displaying at least one function command in a mobile terminal, the method comprising:
displaying an object list, which comprises at least one object, in a first fixed region of a display unit; and
displaying a menu list, which comprises the at least one function commands executable for the selected object, in a second fixed region of the display unit if one of the at least one object is selected from the object list.

2. The method of claim 1, further comprising executing the selected function command for the selected object if one of the at least one function command is selected from the menu list.

3. The method of claim 1, wherein the menu list is displayed while the object list is displayed.

4. The method of claim 1, wherein the at least one object includes at least one of a phone number, a call record, a text and voice message, a picture file, an audio file and a moving picture file.

5. The method of claim 1, wherein the menu list differs in part according to a type of the selected object.

6. The method of claim 1, wherein the step of displaying the object list further comprises:
sorting the object list in order of most to least number of selected objects; and
displaying the sorted object list.

7. The method of claim 1, wherein the step of displaying the object list further comprises:
sorting the object list in order based on recently selected object; and
displaying the sorted object list.

8. The method of claim 1, wherein the step of displaying the object list further comprises:
sorting the object list in order set by a user; and
displaying the sorted object list.

9. The method of claim 1, wherein the step of displaying the object list is executed if the mobile terminal is in a standby mode.

10. A method of displaying at least one function command in a mobile terminal, the method comprising:
displaying an object list, which comprises at least one object, in a first display unit;
displaying a menu list, which comprises the at least one function command executable for the selected object, in a second display unit if one of the at least one object is selected from the object list,; and
executing the selected function command for the selected object if one of the at least one function command is selected from the menu list.

11. The method of claim 10, wherein the menu list differs in part according to a type of the selected object.

12. A mobile terminal, comprising:
a display unit;
an input unit; and
a control unit displaying an object list, which comprises one or more objects, in a first fixed region of a display unit,
wherein if one of the one or more objects is selected from the object list, the control unit displays the menu list of one or more function commands corresponding to the selected object in a second fixed region of the display unit and if one of the one or more function commands is selected from the menu list, the control unit allows the selected function command to be executed for the selected object.

13. The mobile terminal of claim 12, wherein the control unit allows the menu list to be displayed while the object list is displayed.

14. The mobile terminal of claim 13, wherein the display unit and the input unit comprise a built-in touchscreen, and wherein one of the one or more objects and one of the one or more function commands are selected by touching the corresponding object on the touchscreen and dragging & dropping the touched object on the corresponding function command in the menu list.

15. A mobile terminal comprising:
a first display unit;
a second display unit;
an input unit; and
a control unit displaying an object list of at least one object in the first display unit,
wherein if one of the at least one object is selected from the object list, the control unit displays a menu list of at least one function command corresponding to the selected object in the second display unit, and if one of the at least one function command is selected from the menu list, the control unit allows the selected function command to be executed for the selected object.

16. The mobile terminal of claim 15, wherein the menu list differs in part according to a type of the selected object.

17. A method of displaying at least one function command in a mobile terminal, the method comprising:
displaying a menu list, which comprises at least one function command, in a first fixed region of a display unit;
displaying an object list, which comprises at least one object, enabling the selected function command to be executed if one of the at least one function command is selected from the menu list; and
executing the selected function command corresponding to the selected object if one of the at least one object is selected from the object list.

18. The mobile terminal of claim 17, wherein the object list is displayed while the menu list is displayed.

19. A mobile terminal, comprising:
a display unit;
an input unit; and
a control unit displaying a menu list, which comprises at least one function command, in a first fixed region of a display unit,
wherein if one of the at least one function command is selected from the menu list, the control unit displays an object list of at least one or more objects enabling the selected function command to be executed, and if one of the at least one object is selected from the object list, the control unit allows the selected function command to be executed for the selected object.

20. The mobile terminal of claim 19, wherein the display unit and the input unit comprise a built-in touchscreen, and wherein one of the at least one object and one of the at least one function command is selected by touching the corresponding object on the touchscreen and dragging & dropping the touched object on the corresponding function command in the menu list.
